# EUROPÄISCHE PATENTSCHRIFT

(11) **EP 1 256 153 B1**
(45) Veröffentlichungstag und Bekanntmachung des Hinweises auf die Patenterteilung: **28.04.2004**
(21) Anmeldenummer: 01919277.2
(22) Anmeldetag: 13.02.2001
(51) Int. Cl.: H02G 11/00, F16G 13/16, F16L 3/015

(54) **ENERGIEFÜHRUNGSKETTE**
ENERGY GUIDING CHAIN
CHAINE DE GUIDAGE D'ENERGIE

(30) Priorität: 16.02.2000 DE 20002820 U
(43) Veröffentlichungstag der Anmeldung: 13.11.2002
(73) Patentinhaber: IGUS SPRITZGUSSTEILE FÜR DIE INDUSTRIE GmbH, D-51147 Köln (DE)
(72) Erfinder: BLASE, Frank, 51429 Bergisch Gladbach (DE)
(74) Vertreter: Lippert, Stachow, Schmidt & Partner
(86) Internationale Anmeldenummer: PCT/EP2001/001576
(87) Internationale Veröffentlichungsnummer: WO 2001/061816

(56) Entgegenhaltungen:
- WO-A-93/20366
- WO-A-97/17557
- DE-A- 19 512 088
- DE-A- 19 839 575
- DE-U- 20 002 820
- GB-A- 1 580 892

## Beschreibung

Die Erfindung betrifft eine Energieführungskette zur Führung von Schläuchen, Kabeln oder Leitungen mit Kettengliedern aus jeweils zwei Kettenlaschen und mit zumindest einem die Kettenlaschen verbindenden Quersteg, wobei Kettenlaschen von benachbarten Kettengliedern Gelenkbereiche aus miteinander korrespondierenden Gelenkzapfen und Ausnehmungen zur Aufnahme der Gelenkzapfen aufweisen, mittels derer die Kettenglieder gelenkig miteinander verbunden sind, und wobei die Kettenlaschen benachbarter Kettenglieder unter Ausbildung von Strängen von Kettenlaschen miteinander überlappende Überlappungsbereiche aufweisen, wobei die miteinander korrespondierenden Gelenkzapfen und Ausnehmungen in den Überlappungsbereichen der Kettenlaschen angeordnet sind, und wobei zumindest eine Kettenlasche mit einem materialgeschwächten Bereich vorgesehen ist, der eine Längenveränderung des Kettenstranges über das im Gelenkbereich in allen Richtungen der Kettenlasche auftretende Spiel hinaus ermöglicht.

Energieführungsketten werden zumeist eingesetzt, wenn der bewegliche Anschlusspunkt, dem zumeist ein Verbraucher zugeordnet ist, linear entlang der Längsrichtung der Energieführungskette bewegt wird. Gewisse Toleranzen des Geradeauslaufs des Anschlusspunktes können durch das Spiel in den Gelenkverbindungen der Kettenglieder aufgefangen werden.

Demgegenüber werden gattungsgenässe Energieführungsketten in Anwendungsbereichen eingesetzt, bei denen der bewegliche Anschlusspunkt eine signifikante Bewegung quer zur Längsrichtung der Energieführungskette vollführt, und zwar gleichzeitig mit oder nachfolgend zu einer Linearbewegung in Längsrichtung der Kette. Diese Querbewegung kann im Bereich der Breite eines Kettengliedes liegen oder ein Vielfaches derselben betragen.

Aus der GB 1 580 892, die als nächstliegender Stand der Technik angesehen wird, und der DE 198 39 575 A1 sind gattungsgemässe Energieführungsketten bekannt, bei denen die Ausnehmungen der Kettenlaschen zur Aufnahme der Kettenlaschen oval oder als Langloch ausgeführt sind, so daß in den Gelenkbereichen in Kettenlängsrichtung ein erhöhtes Spiel gegenüber einer in der Hauptebene der Kettenlaschen senkrecht zur Kettenlängsrichtung liegenden Richtung vorliegt. Durch dieses zusätzliche Spiel wird eine Längenveränderung des Kettenlaschenstranges ermöglicht.

Ein zusätzliches Spiel in den Gelenkbereichen ist jedoch mit dem Nachteil verbunden, das hierdurch die Geradeauslaufeigenschaften der Energieführungskette verschlechtert werden. So besteht beispielsweise bei Energieführungsketten, bei denen das Obertrum auf dem Untertrum abgelegt wird, eine erhöhte Gefahr, das das Obertrum von dem Untertrum rutscht. Auch bei freitragendem Obertrum oder anderen Betriebsweisen der Energieführungskette ergeben sich entsprechende Probleme. Ferner wird durch das erhöhte Spiel im Gelenkbereich die Gelenkverbindung der Kettenlaschen höherem Verschleiss ausgesetzt.

Der Erfindung liegt somit die Aufgabe zugrunde, gattungsgemässe Energieführungsketten, bei welchen der bewegliche Anschlußpunkt eine Querbewegung zur Längsrichtung der Energieführungskette vollführen kann, dahingehend weiterzubilden, dass diese bei konstruktiv einfachem Aufbau und hoher Lebensdauer verbesserte Geradeauslaufeigenschaften aufweisen.

Diese Aufgabe wird durch eine Energieführungskette gelöst, bei welcher der materialgeschwächte Bereich als elastisch deformierbarer Bereich der Kettenlasche ausgebildet ist. Durch die elastische Deformation der erfindungsgemäss in die Kettenlaschen eingeführten Bereiche wird eine Längenveränderung des Kettenstranges über das im Gelenkbereich auftretende freie Spiel hinaus ermöglicht, wobei der Längenveränderung jedoch eine elastische Rückstellkraft entgegengesetzt wird, die die Geradeauslaufeigenschaften verbessert. Es versteht sich, dass die elastisch deformierbaren Bereiche auch bei Ausnehmungen zur Aufnahme der Gelenkzapfen mit ovalem, länglichen oder anders erweitertem Querschnitt vorgesehen sein können.

Die Längenveränderung des Kettenstrangs kann dadurch erfolgen, dass die Kettenlaschen selbst eine Längenveränderung erfahren oder aber dass der Verbindungsbereich benachbarter Kettenlaschen verlängerbar ist. Durch die zusätzliche Einführung des elastisch deformierbaren Bereichs kann somit eine Lageveränderung eines Bereichs der Energieführungskette quer zur Kettenlängsrichtung erfolgen, die deutlich größer ist als es das im Gelenkbereich der Kettenglieder auftretende freie Spiel von sich aus ermöglicht, ohne die Gelenkbereiche unter Dauerbetrieb der Kette über Gebühr zu beanspruchen. Der bewegliche Anschlusspunkt kann somit bei einer gegebenen Länge der Energieführungskette eine deutlich grössere Querbewegung ausführen, die bereits über eine Länge von einigen wenigen Kettengliedern, z.B. vier bis zehn Kettengliedern, ohne hierauf beschränkt zu sein, einen seitlichen Versatz des beweglichen Anschlusspunktes um die Breite eines Kettenglieds ermöglicht.

Durch die Einführung der elastisch deformierbaren Bereiche kann die Länge des diesen Bereichen zugeordneten Kettenstrangs der Energieführungskette bei Krafteinwirkung verändert werden, d.h. gedehnt oder gestaucht werden, wodurch eine Verbiegung der Energieführungskette quer zur Längsrichtung derselben ermöglicht wird. Es versteht sich, dass hierdurch auch auf die Kettenlaschen des gegenüberliegenden Stranges Deformationskräfte wirken, die in den Gelenkbereichen oder durch eine Deformation der Kettenlaschen selbst aufzufangen sind. Die elastisch deformierbaren Bereiche der Kette können bei einer Querbewegung derselben auf der ein- und/oder auswärtsgekrümmten Seite der Kette angeordnet sein, so daß einer der Stränge gestaucht oder gedehnt wird oder beide Stränge ihre Länge bezogen auf die neutrale Faser der Kette einander entgegengesetzt ändern.

Die erfindungsgemäße Ausbildung der Energieführungskette kann unabhängig von deren Montageart vorteilhaft sein, d.h. in liegender Stellung aber auch bei Montage in Seitenlage oder bei hängender oder stehender Anordnung der Energieführungskette, d.h. wenn der die gegenüberliegenden Trume verbindende Umlenkbereich den höchsten oder tiefsten Bereich der Energieführungskette bildet, oder bei zickzackförmig ablegbarer Energieführungskette. Die Verschwenkwinkel z.B. in gestreckter und abgewinkelter Lage benachbarter Laschen können durch Anschläge begrenzt werden, die vorzugsweise an den Laschen angeordnet sind und einstückig angeformt sein können. Die erfindungsgemäßen Maßnahmen können bei linear oder entlang eines Kreisbogens zu verfahrenden Energieführungsketten vorgenommen werden, wobei im letzteren Fall die Kettenglieder abgewinkelt ausgeführt sein können, wobei durch die über das Spiel in den Gelenkbereichen hinausgehende Längenveränderung eines Kettenstranges eine Bewegung mit verringertem oder erhöhtem Krümmungsradius möglich ist.

Nach einer bevorzugten Ausführungsform sind Kettenlaschen vorgesehen, die zwischen den Gelenkverbindungen der gegenüberliegenden Überlappungsbereiche der Kettenlasche elastisch deformierbare Bereiche aufweisen, die sich über die gesamte Höhe der Kettenlasche, vorzugsweise senkrecht zur Längsrichtung der Lasche, erstrecken. Der elastisch deformierbare Bereich ist vorzugsweise in Form einer Querschnittseinschnürung ausgebildet, so dass dieser Bereich in Art eines Filmscharniers wirkt. Die Materialschwächung kann auch durch ein Material erhöhter Elastizität ausgebildet sein oder durch ein anderes eine Längenänderung und vorzugsweise zugleich Winkeländerung zulassendes Element, das vorzugsweise elastische Rückstellkräfte auf die lageveränderten Teile der Kettenlasche ausübt. Vorzugsweise ist der elastisch deformierbare Bereich über die gesamte Höhe der Kettenlasche gleichbleibend ausgebildet. Eine derartige Materialschwächung ermöglicht, dass die Gelenkbereiche, wie bisher üblich, ein nur geringes Spiel aufweisen, was günstige Laufeigenschaften der Kette bedingt, und zudem gleichzeitig auch eine Abwinkelung und ggf. auch Stauchung der angrenzenden Teile der Lasche zueinander. Des Weiteren treten wegen der grösseren Ausdehnung des Dehnungsbereichs weniger Materialermüdungen auf.

Das Filmscharnier kann beispielsweise in Form einer Nut mit V-förmigen oder im wesentlichen runden Querschnitt und mit einem Öffnungswinkel von ca. 45-90° ausgebildet sein. Die Einschnürung kann bis auf 1/5 - 1/2 der mittleren Stärke der Kettenlasche erfolgen, ohne hierauf beschränkt zu sein.

Der zwischen den Gelenkverbindungen der Kettenlasche angeordnete elastisch deformierbare Bereich kann insbesondere benachbart zu der Aufnahme des Gelenkzapfens des benachbarten Kettengliedesangeordnet sein, d.h. benachbart zu der Stelle, bei welcher die zur Längenveränderung des Kettenstranges führenden Kräfte auf die unter Krafteinwirkung reversibel längenveränderliche Kettenlasche wirken.

Nach einer vorteilhaften Weiterbildung kann die Querschnittseinschnürung voneinander beabstandete Bereiche aufweisen, die bezüglich der Hauptebene der zugeordneten Kettenlasche einen seitlichen Versatz zueinander aufweisen und die unter Verringerung des seitlichen Versatzes eine Längung der Kettenlasche ermöglichen. Die Bereich können als Ausstülpung in Art einer bogenförmigen Filmbrücke oder Dehnungsfalte ausgeführt sein, wobei die beiden Enden des Bogens an gegenüberliegen, durch die Querschnittseinschnürung getrennten Bereichen der zugeordneten Kettenlasche angeordnet, beispielsweie angeformt sind. Der Bogen kann bezogen auf das Innere der Energieführungskette nach innen oder nach aussen geöffnet sein und im mittleren Bereich gegenüber den Befestigungsbereichen des Bogens an den zugeordneten Laschenabschnitten nach innen oder aussen versetzt sein, so dass der mittlere Bogenabschnitt über die Befestigungsbereiche nach innen oder aussen vorsteht. Der Bogen kann somit beispielsweise eine U-, V- oder W-förmige Gestalt aufweisen, was für sowohl die dem Ketteninneren zu- als auch abgewandten Seitenflächen des Bogen gelten kann. Die Seitenflächen des elastisch deformierbaren Bereichs können hierbei im wesentlichen parallel zueinander verlaufen. Ferner kann der Bogen einen über die Länge des Bogens im wesentlichen konstanten Querschnitt aufweisen. Unter Längung bzw. Stauchung der Kettenlasche wird der Bogen abgeflacht oder die Bogenflanken steiler, wobei ein seitlicher Versatz des mittleren Bogenabschnittes zu den Befestigungsbereichen des Bogens an den jeweiligen Laschenabschnitten erfolgt. Das bogenartige Filmscharnier ermöglicht somit zugleich eine Längen- und Winkeländerung der benachbarten Kettenlaschenbereiche zueinander. Alternativ kann ein seitlicher Versatz von Bereichen der Querschnittseinschnürung dadurch erzielt werden, dass ein filmscharnierartiger Bereich vorgesehen ist, der mit gegenüberliegenden Enden an den benachbarten, zueinander lageveränderlichen Bereichen der jeweiligen Kettenlasche in unterschiedlichem lateralem Abstand zu den Innenflächen der Kettenlasche angebracht, beispielsweise angeformt ist. Das Filmscharnier ist somit schräg zur Kettenlaschenlängsrichtung gestellt. Eine Längenveränderung der Kettenlasche kann somit einen geringen seitlichen Versatz der durch die Querschnittseinschnürung getrennten Bereiche einer Kettenlaschenbereiche zueinander bewirken.

Der filmscharnierartige Bereich der Kettenlasche ist vorzugsweise vollständig innerhalb des Querschnittes der im wesentlichen nicht elastischen angrenzenden Bereiche der Kettenlasche angeordnet.

Nach einer weiteren vorteilhaften Ausführungsform sind Kettenlaschen bzw. zumindest eine Lasche vorgesehen, die an den an die Ausnehmungen zur Aufnahme der Gelenkzapfen angrenzenden Bereiche aus einem elastisch deformierbaren Material bestehen, wobei die elastische Deformierbarkeit, z.B. aufgrund einer geringeren Materialstärke oder der elastischen Eigenschaften des verwendeten Materials beruhen kann. Die materialgeschwächten Bereiche können auf der den Enden der Kettenlaschen zugewandten Seite der Ausnehmungen angeordnet sind. Die elastisch deformierbaren Bereiche können somit bei einer Bewegung der Energieführungskette in Querrichtung unter Kompression derselben eine Längenveränderung des entsprechenden Kettenstranges ermöglichen. Hierdurch kann der Gelenkzapfen aus seiner Sollstellung bei der üblichen bestimmungsgemäßen Fahrbewegung der Kette, die insbesondere durch die Laschengeometrie definiert wird (z.B. gestreckte Laschen bei Ketten für den Geradeauslauf) herauswandern und so unter Längenveränderung des Kettenstranges eine seitliche Verbiegung der Kette um ein hohes Mass ermöglichen.

Nach einer weiteren vorteilhaften Ausführungsform können die materialgeschwächten Bereiche in Form von Gelenkzapfen ausgeführt sein, die aus einem elastisch deformierbaren Material bestehen, welches eine Längenveränderung eines Kettenstranges unter Deformation der Gelenkzapfen ermöglicht. Die Deformation der Gelenkzapfen kann durch eine Elongation derselben und/oder durch eine Stauchung des Durchmessers derselben erfolgen. Hierzu kann z.B. ein Bereich des Gelenkzapfens mit einem Material vorgesehen sein, das ein höheres Elastizitätsmodul oder eine höhere Komprimierbarkeit aufweisen als das angrenzende Material der Kettenlasche bzw. der gegenüberliegende Gelenkzapfen des Kettengliedes. Die Gelenkzapfen können auch eine geringere Stärke aufweisen als die Gelenkzapfen der gegenüberliegenden Kettenlasche des Kettengliedes, wobei die jeweiligen Aufnahmen für die Gelenkzapfen identisch ausgebildet sein können, die Gelenkzapfen können auch Einschnitte aufweisen, um eine Relativbewegung benachbarter Laschen in Kettenlängsrichtung zu ermöglichen. Die Gelenkzapfen könenn an den Laschen einstückig angeformt oder separat ausgeführt sein.

Vorteilhafterweise sind die Gelenkzapfen in der Aufnahme senkrecht zur Längsrichtung der Kettenlaschen mit nur geringem Spiel geführt, um Torsionsbewegungen benachbarter Kettenglieder zueinander zu verhindern.

Liegen gekröpfte Kettenglieder vor, die einen zum Ketteninneren zurückspringenden und einen zum Kettenäusseren vorspringenden Bereich aufweisen, wobei die zurück- und vorspringenden Bereiche benachbarter Kettenglieder einander überlappen können, so kann nach einer weiteren Ausführungsform der Verbindungsbereich des vorspringenden und zurückspringenden Teils des Kettenglieds als sich über die gesamte Höhe der Kettenlasche erstreckender elastisch deformierbarer Bereich ausgeführt sein, der gegenüber angrenzenden Bereichen eine erhöhte elastische Deformierbarkeit aufweist. Der Verbindungsbereich der gekröpften Kettenglieder ist im wesentlichen Z-förmig ausgeführt, so dass bei einer Materialschwächung dieses Bereichs eine Längenveränderung der Kettenlasche unter einer Winkeländerung der einzelnen Schenkel des Verbindungsbereichs erfolgen kann. Die Laschen sind dabei vorzugsweise derart ausgeführt, daß zwischen den sich im wesentlichen in Kettenlängsrichtung erstreckenden Bereichen ein sich senkrecht zu diesen erstreckender verbindungsbereich ergibt.

Die Enden der Kettenlaschen können im Überlappungsbereich auf der dem Überlappungsbereich des benachbarten Kettenglieds zugewandten Seite Abschrägungen bzw. Ausnehmungen aufweisen, die eine Auslenkung der Kettenglieder in Querrichtung zur Energieführungskette erleichtern. Insbesondere können die mit Gelenkzapfen versehenen Überlappungsbereiche zu den Enden hin konisch zulaufen. Diese Ausgestaltung ist insbesondere dann vorteilhaft, wenn die Kettenlaschen keine sich über deren gesamte Höhe erstreckenden elastisch deformierbaren Bereich aufweisen, der zu einer leichteren Abwinkelung der beiden Überlappungsbereiche eines Kettengliedes zueinander führt. Entsprechend kann der aussenliegende Überlappungsbereich des Kettengliedes an seiner Innenseite mit einer Einbuchtung versehen sein, die im mittleren Bereich der Kettenlasche die größte Tiefe aufweist.

Die erfindungsgemäße Ausgestaltung der Kettenlaschen kann sowohl bei gekröpften Kettenlaschen als auch bei Strängen aus alternierenden Innen- und Aussenlaschen vorgesehen sein. Die Energieführungskette kann aus zwei oder mehreren Strängen von Kettenlaschen bestehen, wobei ein Strang ausschließlich aus Kettenlaschen aufgebaut ist, bei welchen keine übermäßige Längenveränderung des Kettenstrangs ermöglichenden elastisch deformierbaren Bereiche vorgesehen sind, wobei sämtliche oder einige der Kettenlaschen des gegenüberliegenden Kettenstranges entsprechende elastisch deformierbare Bereiche aufweisen. Durch den Anteil der einen Kettenstrang aufbauenden Kettenlaschen mit elastisch deformierbaren Bereichen ist die bei einer gegebenen Krafteinwirkung sich ergebende Auslenkung der Energieführungskette in Querrichtung einstellbar. So können z.B. Kettenglieder mit elastischen Bereichen mit herkömmlichen Kettenlaschen alternieren oder jeweils zu alternierend angeordneten Gruppen mit jeweils gleicher oder unterschiedlicher Anzahl von Kettenlaschen gleichen Typs angeordnet sein. Insbesondere dann, wenn Kettenlaschen mit einer Längenveränderungen des Kettenstrangs ermöglichenden elastischen Bereichen vorgesehen sind, wobei die elastischen Bereiche durch eine geringere Materialstärke oder eine höhere Elastizität des entsprechenden Materials realisiert sind, können Kettenglieder vorgesehen sein, bei denen beide gegenüberliegenden Kettenlaschen mit einem entsprechenden elastischen Bereich versehen sind. Insbesondere können beide Kettenlaschen eines Kettengliedes mit sich über die gesamte Höhe der Lasche erstreckenden materialgeschwächten Bereiche, z.B. in Form von filmscharnierartigen Querschnittsverengungen oder entsprechend ausgebildeten Verbindungsbereichen von vor- und zurückgekröpften Überlappungsbereichen der Laschen, aber auch mit entsprechend ausgebildeten Gelenkbereichen versehen sein. Um bei derartigen Kettenlaschen eine signifikante Längenveränderung des Kettenstrangs zu erzielen, müssen entsprechende, einen Grenzwert übersteigende Kräfte auf den Kettenstrang ausgeübt werden, wobei durch die elastische Deformation der die Längenveränderung des Stranges ermöglichenden Bereiche Rückstellkräfte erzeugt werden. Derartige Ketten weisen somit auch im Geradeauslauf gute Fahreigenschaften auf, wenn bei einem oder mehreren Kettengliedern beide Laschen mit materialgeschwächten Bereichen versehen sind.

Die Laschen eines Kettengliedes können durch im wesentlich starre Querstege, die vorzugsweise einstückig angeformt aber auch durch Rastmittel befestigt sein können, verbunden sein. Die Querstege können auch tordierbar oder geteilt ausgeführt sein.

Es können Kettenglieder mit geteilten Querstegen vorgesehen sein, die ineinander greifende korrespondierende Vorsprünge und Ausnhemungen aufweisen, wobei der Vorsprung eines Querstegbereichs in der Hauptebene des Quersteges, die parallel zur Kettenlängsrichtung und senkrecht zu den Laschen steht, gegenüber dem anderen Querstegbereich um einen Winkelbereich verschwenkbar ist. Zugleich ist die Ausnehmung mit einer Hinterscheidung versehen, die der Vorsprung hintergreift, so daß die getrennten Querstegbereiche in Quersteglängsrichtung, zumindest nach einem gewissen oder praktisch ohne Spiel, gegen Längsverschiebung zueinander gesichert sind.

Die materialgeschwächten Bereiche sind vorzugsweise an den mit Ausnehmungen zur Aufnahme von Gelenkzapfen versehenen Teilen der Kettenlaschen angeordnet.

Die verschiedenen Ausführungsformen der elastischen Bereiche können selbstverständlich auch in unterschiedlicher Kombination bei ein und demselben Kettenglied bzw. bei ein und derselben Kettenlasche verwirklicht sein.

Um trotz der elastischen Bereiche einen stabilen Lauf bzw. eine stabile Führung der Kette zu ermöglichen, sind benachbarte Kettenlaschen eines Stranges vorteilhafterweise mittels einer Schnappverbindung miteinander verbunden, wodurch insbesondere bei Querversatz der Kette eine sichere und einfache Verbindung der Laschen gewährleistet ist. Vorteilhafterweise ist hierzu der Gelenkzapfen mit Rastmitteln versehen und z.B. in Art eines Druckknopfes ausgebildet oder mit Sicherungsfedern versehen, wobei die Rastmittel vorteilhafterweise an den freien Enden der Zapfen angeordnet sind, so dass diese gegen Herausziehen aus den korrespondierenden Ausnehmungen gesichert sind. Vorzugsweise ist die korrespondierende Ausnehmung über deren gesamte Erstreckung in Laschenlängsrichtung mit einer die Rastaufnahme aufnehmenden Hinterschneidung bzw. Nut versehen.

Es sind jedoch auch andere Schnappverbindungen zwischen Kettenlaschen möglich, z.B. wenn die stirnseitigen Enden der Kettenlaschen an dem benachbarten Kettenglied von einer Nut aufgenommen werden, so dass der Gelenkzapfen der jeweiligen Kettenlasche in die korrespondierende Ausnehmung einschnappt, wie dies beispielsweise in der DE 195 12 088 beschrieben ist.

Die Kettenlaschen der erfindungsgenässen Energieführungskette können, mit Ausnahme der eine Längung der Laschenstränge ermöglichenden erfindungsgemässen elastischen Bereiche, im wesentlichen starr und biegesteif ausgeführt sein oder eine gewisse seitliche Deformierbarkeit aufweisen. Die longitudinale elastische Deformierbarkeit der Laschenstränge wird überwiegend oder paraktisch ausschliesslich durch die erfindungsgemässen elastischen Bereiche ermöglicht.

Es versteht sich, dass die Laschenstränge der erfindungsgemässen Energieführungskette aus gekröpften Laschen oder aus alternierend angeordneten Innen- und Aussenlaschen bestehen können, ohne hierauuf beschränkt zu sein.

Des Weiteren betrifft die Erfindung eine Führungskonstruktion für die erfindungsgemäße Energieführungskette, die als Führungsrinne mit gegenüberliegenden Seitenwänden und einer bodenseitigen Ablage ausgebildet sein kann. Die Führungskonstruktion kann Befestigungsmittel zur Befestigung an einer Tragkonstruktion umfassen. Die Führungskonstruktion weist auf einem Teilbereich ihrer Länge seitlich der Energieführungskette angeordnete gestreckte und parallel zueinander ausgerichtete Führungsprofile zur Aufnahme eines gestreckt angeordneten Bereichs der Energieführungskette auf, wobei die Führungsprofile in geringem Abstand der Energieführungskette angeordnet sind. Des Weiteren ist zumindest ein Führungsprofil (gegebenenfalls mehrere) vorgesehen, das zur Längsrichtung der gestreckt angeordneten Führungsprofile einen Winkel einschließt, so dass sich an den gestreckten Führungsbereich der Führungskonstruktion ein abgewinkelter oder bogenförmiger Führungsbereich anschließt.

Die sich mit einem Winkel an die gestreckt angeordneten Führungsprofile in Längsrichtung anschließenden Führungsprofile können auf gegenüberliegenden Seiten der Führungskonstruktion einen unterschiedlichen Winkel zu dem gestreckten Führungsprofil aufweisen. Hierdurch wird eine Querbewegung der Energieführungskette über einen Winkelbereich ermöglicht und auf diesen beschränkt, wobei ein kontinuierlicher Übergang der Führungskonstruktion zu einem Führungsbereich gegeben ist, der lediglich eine Längsbewegung der Energieführungskette ermöglicht und den Querversatz auf ein geringes Maß, z.B. im Bereich der Breite eines Laschenstranges der Energieführungskette beschränkt. Die abgewinkelten Bereiche der Führungskonstruktion können zu einer oder zu beiden Seiten der Führungskonstruktion hin abgewinkelt sein. In dem abgewinkelten Bereich der Führungskonstruktion kann eine bodenseitige Ablage für die Energieführungskette vorgesehen sein, es kann auch lediglich eine seitliche Führung durch die Führungskonstruktion bestehen.

Die Erfindung sei nachfolgend beispielhaft veranschaulicht und anhand der Zeichnung beispielhaft beschrieben. Es zeigen:
- Fig.1a: eine Draufsicht auf einen Abschnitt einer erfindungsgemässen Energieführungskette einer ersten Ausführungsform,
- Fig.lb: eine Abwandlung der Energieführungskette nach Figur 1a,
- Fig. 2: ein Kettenglied einer Energieführungskette nach Fig. 1 in Draufsicht (Fig. 2a), in stirnseitiger Ansicht (Fig. 2b) und in Seitenansicht (Fig. 2c),
- Fig. 3: eine Draufsicht auf ein Kettenglied einer weiteren Ausführungsform mit deformierbarem Mittelbereich, und
- Fig. 4: eine Draufsicht auf ein Kettenglied einer weiteren Ausführungsform mit deformierbaren Gelenkzapfen.
- Fig. 5: eine Kettenlasche in einer weiteren Ausführungsform in Seitenansicht mit Materialschwächung an der Gelenkzapfenaufnahme,
- Fig. 6: eine Draufsicht auf eine in einer erfindungsgemässen Führungskonstruktion geführten Energieführungskette mit einem in Querrichtung ausgelenktem Bereich;

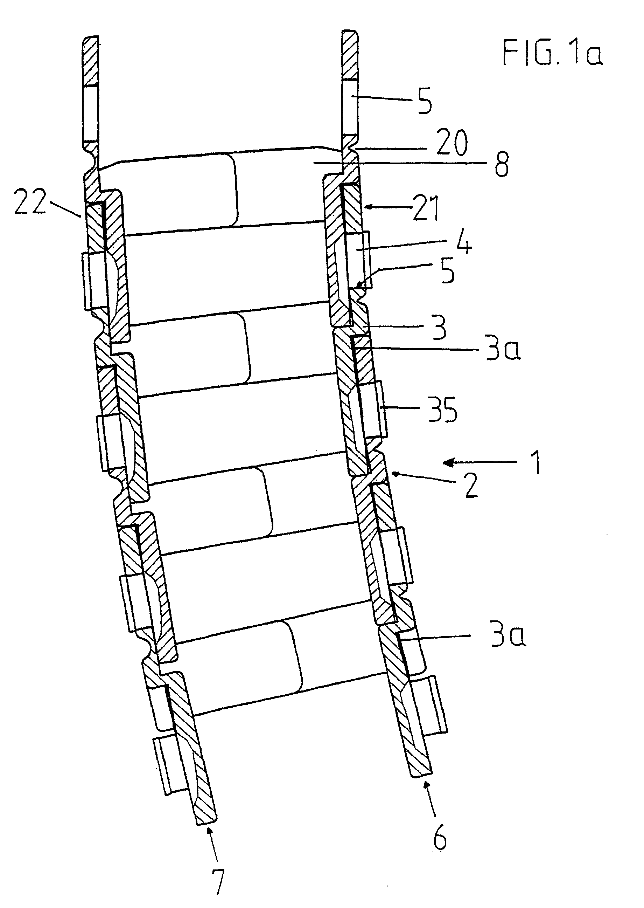

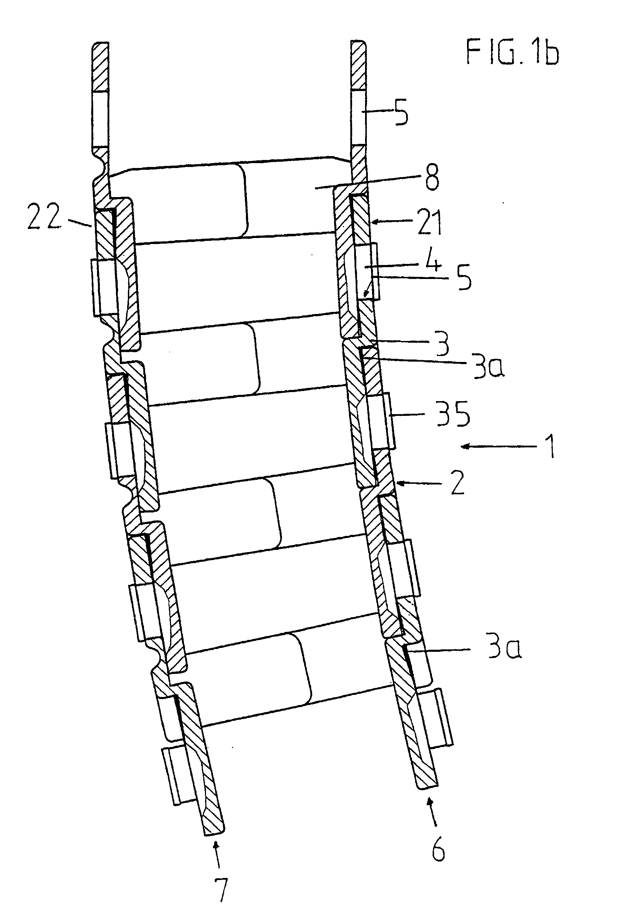

Fig. 1 zeigt eine Energieführungskette 1 aus gelenkig miteinander verbundenen Kettengliedern 2, die jeweils gekröpfte Kettenlaschen 3 aufweisen, welche mittels Gelenkzapfen 4 verbunden sind, die in korrespondierende kreisrunde Ausnehmungen 5 des Überlappungsbereichs der benachbarten Kettenlasche eingreifen, um diese gelenkig miteinander zu verbinden. Die Laschen 3 der jeweils miteinander zu verbindenden Laschenstränge 6, 7 sind über einen durchgehenden und einstückig angeformten Quersteg (nicht gezeigt) miteinander verbunden und weisen zur Erleichterung der Anbringung der zu führenden Kabel oder dergleichen einen weiteren durchbrochenen Quersteg 8 auf, der aber auch durchgehend ausgeführt sein kann.

Zwischen den Gelenkbereichen, die durch die Zapfen und die in dem Ausführungsbeispiel kreisrunden Ausnehmungen 5 gebildet werden, sind sich über die gesamte Höhe der Laschen 3 erstrekkenden Materialschwächungen in Form von Querschnittseinschnürungen 20 vorgesehen. Die Einschnürungen erstrecken sich bis auf ca. 1/4 der Wandstärke der Überlappungsbereiche 21, 22 der Kettenlaschen und weisen im unbelasteten Zustand einen Öffnungswinkel von 30 - 90° (hier: ca. 45°) auf. Durch die Einschnürungen wird zum einen eine Einschnürung der Kettenlaschen selbst ermöglicht, wobei die Gelenkverbindungen nur das zur Befestigung der Zapfen und Verschwenkung der Kettenglieder notwendige Spiel aufweisen. Des Weiteren wird durch den Öffnungswinkel der Einkerbungen bzw. durch einen ausreichenden Flankenabstand derselben eine Abwinkelung der Überlappungsbereiche 21, 22 eines Kettenglieds zueinander ermöglicht, wodurch die Gelenkverbindungen entlastet werden.

Die sich über die Höhe der Laschen erstreckenden Materialschwächungen sind unmittelbar benachbart den Ausnehmungen 5 zur Aufnahme der Zapfen 4 zwischen den beiden Gelenkbereichen der jeweiligen Lasche vorgesehen, nach dem Beispiel in etwa auf Höhe des Endes des Quersteges 8. Gemäß Fig. 1 sind die Filmbrücken an beiden Laschen der Kettenglieder vorgesehen, was auch bei anderen Ausführungen der elastisch deformierbaren Bereiche der Fall sein kann, insbesondere wenn diese durch geringere Materialstärke oder durch höhere Elastizität des jeweiligen Materials ausgebildet sind. Es kann auch nur eine Lasche mit einer Filmbrücke versehen sein.

Die Energieführungskette 1 kann unter Ausbildung eines Obertrums, eines Untertrums und eines diese verbindenden Umlenkbereichs angeordnet werden, wobei die Verschwenkwinkel der Kettenglieder zueinander in Geradeausrichtung und in der abgewinkelten Stellung durch an den Laschen 3 angebrachte Anschläge begrenzt werden.

Figur 1b zeigt eine Abwandlung der Energieführungskette nach Figur 1a, wobei nur an den Laschen 3 des Stranges 6a elastisch deformierbare, eine Strangverlängerung ermöglichende Bereiche 20 vorgesehen sind.

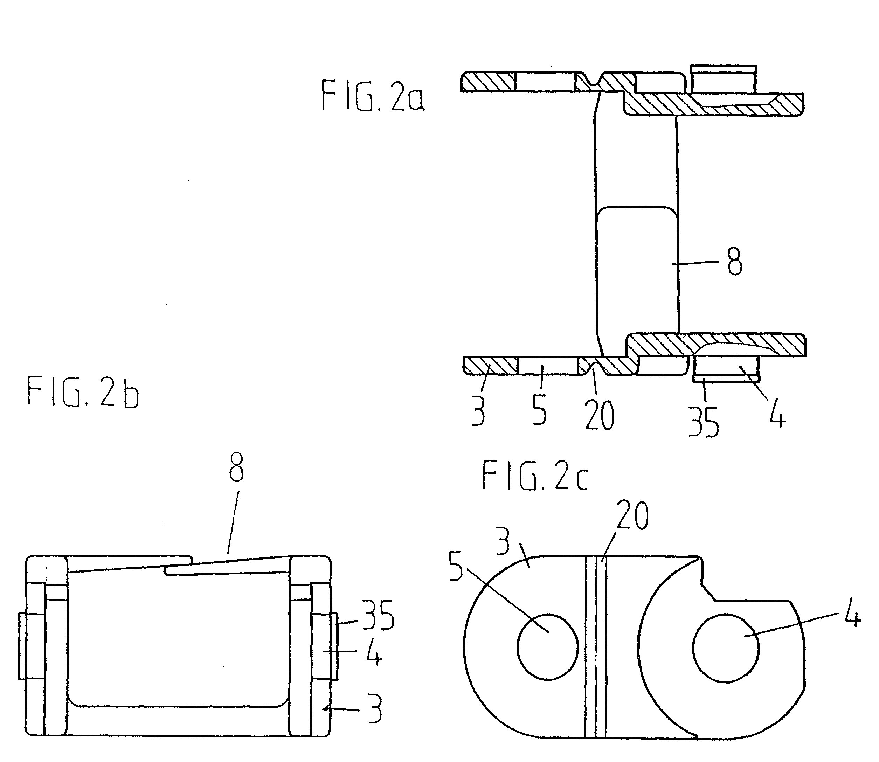

Fig. 2 zeigt ein Kettenglied der Kette nach Fig. 1. Die die Nuten bildenden Querschnittseinschnürungen 20 an beiden Kettenlaschen sind zur Kettenaussenseite hin geöffnet und an beiden Laschen identisch ausgeführt. Der obere Quersteg 8 ist durchbrochen ausgeführt, der untere durchgehende Quersteg einstückig an den Laschen angeformt. Zur Verbindung der Laschen sind Schnappverbindungen in Form von an den freien Enden der Zapfen 4 angeordneten Rastwulsten 35, die als umlaufende Rastvorsprünge ausgeführt sind, vorgesehen.

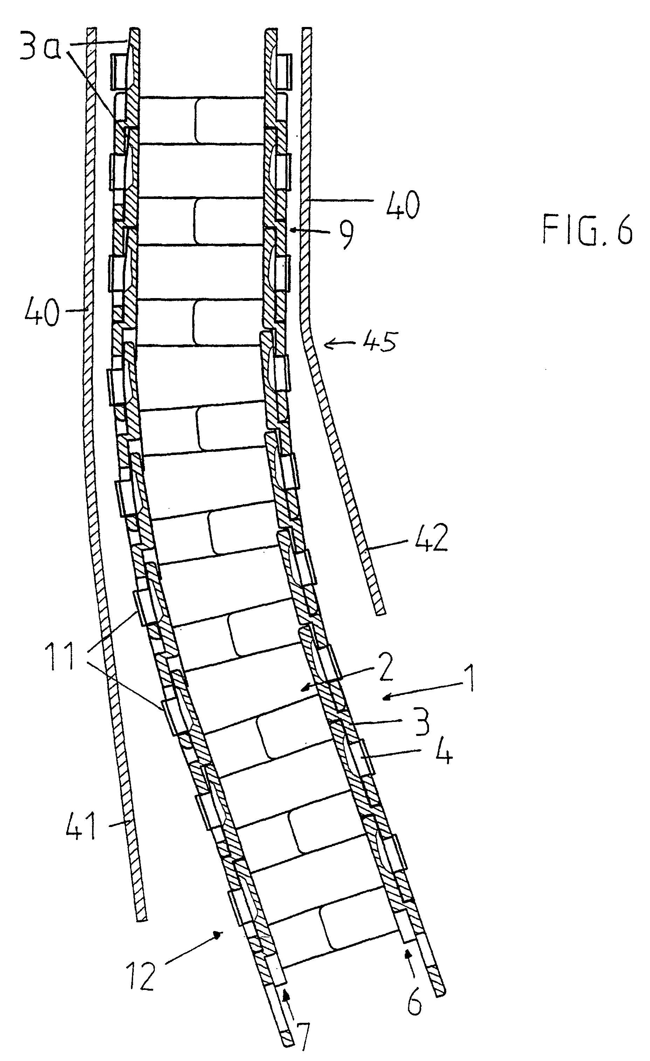

Durch die erfindungsgemäße Ausgestaltung der Kettenglieder (s. auch Fig. 2) kann die Energieführungskette entsprechend der in Figur 6 gezeigten nicht erfindungsgemässen Energieführungskette mit einem ersten geradlinigen Bereich 9 angeordnet werden, an den sich ein in Querrichtung der Kette abgewinkelter Bereich 10 anschließt. Die Abwinkelung benachbarter Kettenglieder ist größer als dies durch das in allen Richtungen vorhandene Spiel im Gelenkbereich der Kettenglieder ermöglicht ist, nach dem Ausführungsbeispiel um ca. 10-20°, ohne hierauf beschränkt zu sein. An den durch die Kettenglieder 11 gebildeten bogenförmigen bzw. gegenüber dem Bereich 9 abgewinkelten Bereich 10 schließt sich wiederum ein in Querrichtung gestreckter Bereich 12 der Kette an. Diese Abwinkelung in Querrichtung wird durch materialgeschwächte Bereiche der Kettenlaschen, die nach der Erfindung als elastisch deformierbare Bereiche ausgeführt sind, ermöglicht, wobei die Bereiche eine Längenveränderung des Stranges 7 über die Länge des Stranges 6 hinaus ermöglichen.

Die Enden der innenliegenden Überlappungsbereiche der Kettenglieder sind auf der dem gegenüberliegenden Kettenglied zugewandten Seite angeschnitten bzw. laufen konisch zu, um eine Biegung der Kette in Querrichtung zu erleichtern. Die abgeschrägten Bereiche 3a (s. Fig. 1 und zur Verdeutlichung Fig. 6) sind hier an den im Biegeradius aussenliegenden Kettenlaschen vorgesehen. Entsprechend können an den Innenseiten der gegenüberliegenden Überlappungsbereiche auch zum Ketteninneren hin geöffnete Ausnehmungen vorgesehen sein. Diese Ausgestaltung der Enden der Überlappungsbereiche ist nicht auf die gezeigte Ausführungsform der materialgeschwächten Bereiche beschränkt.

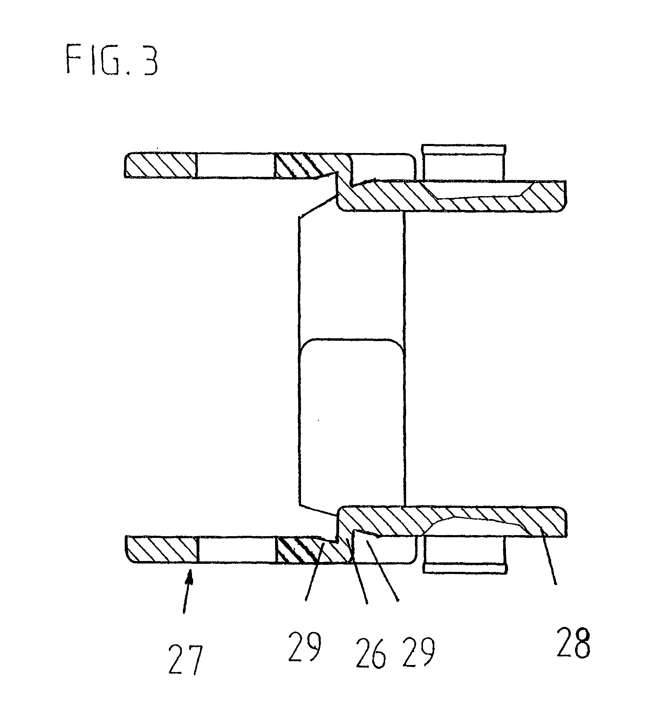

Fig. 3 zeigt eine weitere Ausführungsform, bei welcher der eine Längenänderung des Laschenstranges ermöglichende Bereich 26 in dem Verbindungsbereich des nach außen gekröpften Bereichs 27 und des nach innen gekröpften Bereichs 28 der Lasche angeordnet ist. Der verbindungsbereich kann auch schräg zu den angrenzenden Bereichen 27, 28 gestellt sein. Der verbindungsbereich weist ein Zwischenstück auf, so dass die angrenzenden Bereiche der nach außen und nach innen gekröpften Laschenteile nicht fluchtend angeordnet sind, was hier durch die Einschnürungen 29 erzielt wird. Hierdurch ist eine erhöhte Deformierbarkeit des Verbindungsbereichs 26 gegeben, der eine Längenveränderung der Kettenlasche unter Krafteinwirkung ermöglicht.

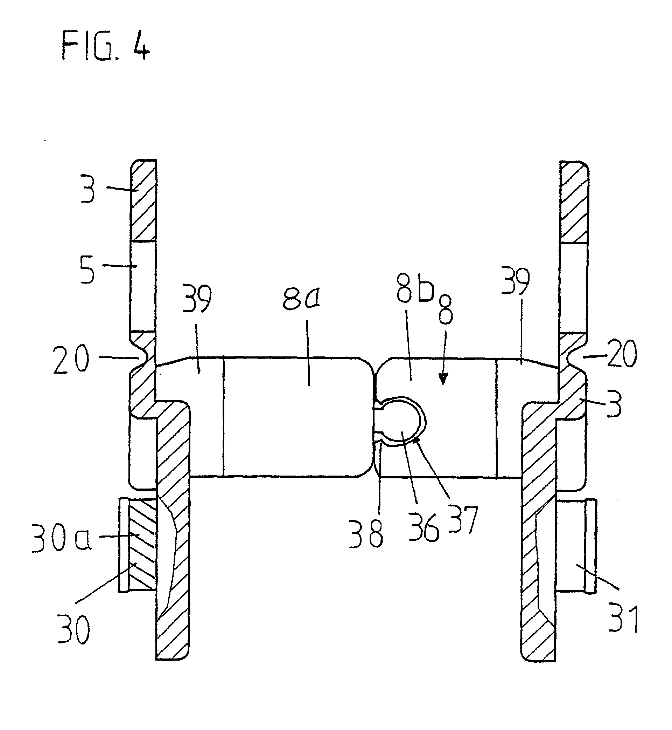

Fig. 4 zeigt eine weitere Ausführungsform, bei welcher die beiden Gelenkzapfen 30, 31 der gegenüberliegenden Laschen des Kettengliedes eine unterschiedliche Elastizität und/oder Kompressibilität aufweisen, so dass durch elastische Deformierbarkeit eines der zapfen 30, 31 mit einem elastisch deformierbaren Bereich 30a eine Längenveränderung des diesem Zapfen zugeordneten Laschenstranges ermöglicht ist. Gegebenenfalls können auch beide Zapfen 30, 31 derart ausgebildet sein, dass unter quer auf die Kette wirkenden Kräften diese unter Längenveränderung eines Stranges einen Querversatz vollzieht. Nach dem Ausführungsbeispiel sind zusätzlich zu den deformierbaren Zapfen die Laschen 3 mit Einschnürungen 20 versehen, diese können jedoch auch fehlen.

Ferner ist an einem freien Ende eines der auf gleicher Höhe angeordneten Bereiche 8a, 8b des Quersteges 8 ein Vorsprung 36 vorgesehen, der in eine korrespondierende Ausnehmung 37 eingreift und hierbei eine Hinterschneidung 38 des Querstegbereichs 8a hintergreift. Die Querstegbereiche 8a,8b sind hierdurch in deren Hauptebene gegeneinander verschwenkbar und gegen Längsverschiebung in Quersteglängsrichtung gesichert, so daß das Kettenglied nicht aufbiegen kann. Um eine Verschwenkung der im wesentlichen starren Querstegbereiche 8a,b beim Einlegen oder Entfernen von Leitungen in Richtung auf die Laschen 3 zu ermöglichen, sind an den Querstegen, hier an den den Laschen zugewandten Enden, Bereiche 39 erhöhter Elastizität vorgesehen.

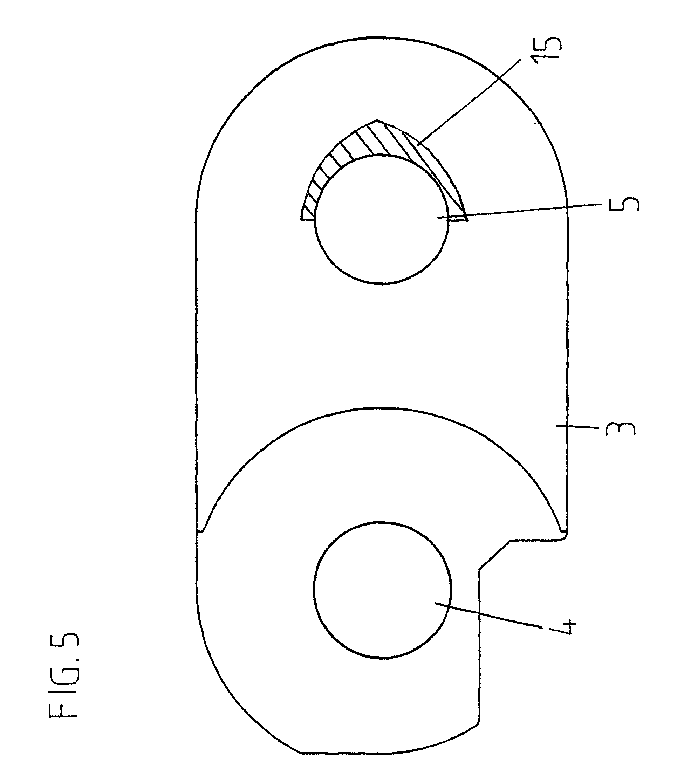

Fig. 5 zeigt eine weitere Ausführungsform, bei welcher der an die Ausnehmung 5 angrenzende Bereich 15, der dem Kettenlaschenende zugewandt ist, aufgrund einer geringeren Wandstärke oder höheren Elastizität unter üblichen Zugbelastungen auf die Kette elastisch deformierbar ist und hierdurch eine zusätzliche Längenveränderung des Kettenstranges ermöglicht. Die Lasche kann als einteiliges Spritzgussteil ausgeführt sein. Der materialgeschwächte Bereich kann auch auf der gegenüberliegenden Seite der Gelenkausnehmung angeordnet sein und hierdurch eine Stauchung des Laschenstranges ermöglichen.

Fig. 6 zeigt eine Führungskonstruktion 45 für erfindungsgemässe Energieführungsketten mit gegenüberliegenden Seitenwänden, wobei die Konstruktion eine bodenseitige Ablage aufweisen kann. Auf einem Teilbereich ihrer Länge sind seitlich der Energieführungskette angeordnete gestreckte und parallel zueinander ausgerichtete Führungsprofile 40 zur Aufnahme eines gestreckt angeordneten Bereichs der Energieführungskette vorgesehen und in geringem Abstand der Energieführungskette angeordnet. In Kettenlängsrichtung schließen sich einstückig angeformte Führungsprofile 41, 42 an, die zur Längsrichtung der gestreckt angeordneten Führungsprofile jeweils einen unterschiedlichen Winkel einschließen, so dass sich an den gestreckten Führungsbereich der Führungskonstruktion ein trichterförmiger Führungsbereich anschließt, der einen seitlichen Versatz der Kette beschränkt.

### Bezugszeichenliste

- 1: Energieführungskette
- 2: Kettenglied
- 3: Lasche
- 4: Zapfen
- 5: Ausnehmung
- 6, 7: Laschenstrang
- 6a,6b: Laschenstrang
- 8: Quersteg
- 8a,8b: Querstegbereiche
- 9: geradliniger Bereich
- 10: abgewinkelter Bereich
- 11: Kettenglied
- 12: gestreckter Bereich
- 13: Lasche
- 14: Ausnehmung
- 15: materialgeschwächter Bereich
- 20: Einschnürung
- 21, 22: Überlappungsbereich
- 26: Verbindungsbereich
- 27: nach außen gekröpfter Bereich
- 28: nach innen gekröpfter Bereich
- 29: Einschnürung
- 30, 31: Zapfen
- 30a: elastisch deformierbarer Bereich
- 35: Rastwulst
- 36: Vorsprung
- 37: Ausnehmung
- 38: Hinterschneidung
- 39: elastischer Bereich
- 40, 41, 42: Führungsprofile
- 45: Führungskonstruktion

## Patentansprüche

1. Energieführungskette zur Führung von Schläuchen, Kabeln oder Leitungen mit Kettengliedern (2) aus jeweils zwei Kettenlaschen (3) und mit zumindest einem die Kettenlaschen verbindenden Quersteg (8), wobei Kettenlaschen (3) von benachbarten Kettengliedern (2) Gelenkbereiche aus miteinander korrespondierenden Gelenkzapfen (4) und Ausnehmungen (5) zur Aufnahme der Gelenkzapfen aufweisen, mittels derer die Kettenglieder (2) gelenkig miteinander verbunden sind, und wobei die Kettenlaschen (3) benachbarter Kettenglieder (2) unter Ausbildung von Strängen (6,7) von Kettenlaschen miteinander überlappende Überlappungsbereiche (21,22) aufweisen, wobei die miteinander korrespondierenden Gelenkzapfen (4) und Ausnehmungen (5) in den Überlappungsbereichen (21,22) der Kettenlaschen angeordnet sind, und wobei zumindest eine Kettenlasche (3) mit einem materialgeschwächten Bereich (15,20) versehen ist, der eine Längenveränderung des Kettenstranges (7) über das im Gelenkbereich (4, 5) in allen Richtungen der Kettenlasche (3) auftretende Spiel hinaus ermöglicht, **dadurch gekennzeichnet, daß** der materialgeschwächte Bereich (15, 20) als elastisch deformierbarer Bereich der Kettenlasche (3) ausgebildet ist.

2. Energieführungskette nach Anspruch 1, **dadurch gekennzeichnet, dass** der elastisch deformierbare Bereich (15) auf Höhe der Gelenkverbindungen (4, 5) der benachbarten Kettenglieder (2) angeordnet ist und sich über die gesamte Höhe der Kettenlasche (3) erstreckt.

3. Energieführungskette nach Anspruch 1, **dadurch gekennzeichnet, dass** der elastisch deformierbare Bereich (20) zwischen den Gelenkverbindungen (4, 5) der benachbarten Kettenglieder angeordnet ist und sich über die gesamte Höhe der Kettenlasche (3) erstreckt.

4. Energieführungskette nach einem der Ansprüche 1 - 3, **dadurch gekennzeichnet, dass** der elastisch deformierbare Bereich als Querschnittseinschnürung (20) der Kettenlasche (3) ausgeführt ist.

5. Energieführungskette nach Anspruch 4, **da-durch gekennzeichnet, dass** die Querschnittseinschnürung (20) voneinander beabstandete Bereiche aufweist, die bezüglich der Hauptebene der zugeordneten Kettenlasche (3) einen seitlichen Versatz zueinander aufweisen und die unter Verringerung des seitlichen Versatzes eine Längung der Kettenlasche ermöglichen.

6. Energieführungskette nach einem der Ansprüche 1 - 5, **dadurch gekennzeichnet, dass** der elastisch deformierbare Bereich (30a) an einem Gelenkzapfen (30) vorgesehen und zwischen einem Angriffspunkt (35) der benachbarten Kettenlasche (3) an dem Gelenkzapfen und dem Befestigungsbereich des Gelenkzapfens an der diesem zugeordneten Kettenlasche (3) angeordnet ist.

7. Energieführungskette nach einem der Ansprüche 1 - 6, **dadurch gekennzeichnet, dass** der elastisch deformierbare Bereich an einem an die Ausnehmung (5) zur Aufnahme des Gelenkzapfen (4) angrenzenden Bereich (15) angeordnet ist.

8. Energieführungskette nach einem der Ansprüche 1 - 7, **dadurch gekennzeichnet, dass** gekröpfte Kettengliedern (2) mit jeweils einem zum Kettenäußeren vorspringenden Bereich (27) und einem zum Ketteninneren zurückspringenden Bereich (28) und einen zwischen diesen angeordneten Verbindungsbereich (26) vorgesehen sind und dass der verbindungsbereich (26) über die gesamte Höhe der Kettenlasche (3) als elastisch deformierbarer Bereich ausgeführt ist.

9. Energieführungskette nach einem der Ansprüche 1 - 8, **dadurch gekennzeichnet, dass** zumindest bereichsweise an einem Strang (6a, 7a) der Energieführungskette (1) Kettenglieder (2) mit Kettenlaschen (3) vorgesehen sind, die einen eine Längenveränderung des Stranges (6a,7a) ermöglichenden elastisch deformierbaren Bereich (20) aufweisen, und dass an den gegenüberliegenden Kettenlaschen der Kettenglieder keine eine Längenveränderung des Stranges (6a) ermöglichenden materialgeschwächten Bereiche vorgesehen sind.

10. Energieführungskette nach einem der Ansprüche 1 - 9, **dadurch gekennzeichnet, dass** Kettenglieder (2) vorgesehen sind, bei denen beide gegenüberliegenden Kettenlaschen (3) mit einem elastisch deformierbaren Bereich versehen sind.

11. Energieführungskette nach einem der Ansprüche 1 - 10, **dadurch gekennzeichnet, dass** Kettenglieder (2) mit Kettenlaschen (2) vorgesehn sind, die im Überlappungsbereich (21,22) auf der dem benachbarten Kettenglieds zugewandten Seite Abschrägungen (3a) aufweisen, die eine Auslenkung der Kettenlasche (2) des benachbarten Kettengliedes in Querrichtung zur Energieführungskette (1) erleichtern.

12. Energieführungskette nach einem der Ansprüche 1 - 11, **dadurch gekennzeichnet, dass** die benachbarten Kettenlaschen (3) eines Stranges (7) mittels einer Schnappverbindung (4, 5, 35) miteinander verbunden sind.

13. Energieführungskette nach Anspruch 12, **dadurch gekennzeichnet, dass** der Gelenkzapfen (4) zur Herstellung einer Schnappverbindung Rastmittel (35) aufweist.

14. Energieführungskette nach einem der Ansprüche 1 - 13, **dadurch gekennzeichnet, dass** zumindest eines der Kettenglieder (2) mit einem elastisch deformierbaren Bereich (20) einen geteilten Quersteg (8) mit an gegenüberliegenden Kettenlaschen (3) angeordneten, voneinander durch eine Unterbrechnung getrennten Bereichen (8a,8b) aufweist, und dass zumindest einer der getrennten Bereichen (8b) mit einer Ausnehmung (37) und der gegenüberliegende Bereich (8a) des Quersteges mit einem in die Ausnehmung eingreifenden Vorsprung (36) versehen ist.

15. Führungskonstruktion zur Aufnahme und Führung einer Energieführungskette nach einem der Ansprüche 1-14, wobei die Führungskonstruktion (45) linear zueinander ausgerichtete, einander gegenüberliegende gestreckte Führungsprofile (40) aufweist, die einander gegenüberliegende Seitenwände zur seitlichen Führung eines zwischen den Seitenwänden ablegbaren, gestreckt angeordneten Bereichs der Energieführungskette aufweisen, **dadurch gekennzeichnet, dass** zusätzlich zumindest ein Führungsprofil (41, 42) vorgesehen ist, das zur Längsrichtung des gestreckt angeordneten Führungsprofils (40) einen Winkel einschließt.

16. Führungskonstruktion nach Anspruch 15, **dadurch gekennzeichnet, dass** an beiden gegenüberliegenden Seitenwänden der Führungskonstruktion (45) Führungsprofile (41, 42) vorgesehen sind, die sich an die gestreckt angeordneten Führungsprofile (40) in Längsrichtung in einem Winkel anschließen und auf den gegenüberliegenden Seiten der Führungskonstruktion einen unterschiedlichen Winkel zu den gestreckten Führungsprofilen (40) einschließen.

## Claims

1. Energy guiding chain for guiding hoses, cables or lines, having chain links (2), which each comprise two link plates (3), and having at least one transverse web (8) which connects the link plates, link plates (3) of adjacent chain links (2) having articulated regions which comprise mutually corresponding pivot pins (4) and recesses (5) for receiving the pivot pins, by means of which the chain links (2) are connected to each other in an articulated manner, and the link plates (3) of adjacent chain links (2) having overlap regions (21, 22) which overlap each other so as to form strands (6, 7) of link plates, the mutually corresponding pivot pins (4) and recesses (5) being arranged in the overlap regions (21, 22) of the link plates and at least one link plate (3) being provided with a materially weakened region (15, 20), which allows a longitudinal adjustment of the chain strand (7) beyond the play which occurs in the articulated region (4, 5) in all directions of the link plate (3), **characterised in that** the materially weakened region (15, 20) is in the form of a resiliently deformable region of the link plate (3).

2. Energy guiding chain according to claim 1, **characterised in that** the resiliently deformable region (15) is arranged level with the articulated connections (4, 5) of the adjacent chain links (2) and extends over the entire height of the link plate (3).

3. Energy guiding chain according to claim 1, **characterised in that** the resiliently deformable region (20) is arranged between the articulated connections (4, 5) of the adjacent chain links and extends over the entire height of the link plate (3).

4. Energy guiding chain according to any one of claims 1 to 3, **characterised in that** the resiliently deformable region is in the form of a cross-sectional recess (20) of the link plate (3).

5. Energy guiding chain according to claim 4, **characterised in that** the cross-sectional recess (20) has mutually spaced-apart regions which have a lateral displacement relative to each other, relative to the principal plane of the associated link plate (3), and which allow the link plate to be lengthened with the lateral displacement being reduced.

6. Energy guiding chain according to any one of claims 1 to 5, **characterised in that** the resiliently deformable region (30a) is provided on a pivot pin (30) and is arranged between a point of engagement (35) of the adjacent link plate (3) with the pivot pin and the region in which the pivot pin is fixed to the link plate (3) associated therewith.

7. Energy guiding chain according to any one of claims 1 to 6, **characterised in that** the resiliently deformable region is arranged on a region (15) which adjoins the recess (5) for receiving the pivot pin (4).

8. Energy guiding chain according to any one of claims 1 to 7, **characterised in that** there are provided offset chain links (2) which each have a region (27) which projects towards the chain outer and a region (28) which is set back towards the chain inner and a connection region (26) which is arranged therebetween, and **in that** the connection region (26) is in the form of a resiliently deformable region over the entire height of the link plate (3).

9. Energy guiding chain according to any one of claims 1 to 8, **characterised in that** there are provided, at least intermittently on a strand (6a, 7a) of the energy guiding chain (1), chain links (2) having link plates (3) which have a resiliently deformable region (20) which enables a longitudinal adjustment of the strand (6a, 7a), and **in that**, on the opposing link plates of the chain links, no materially weakened regions which enable a longitudinal adjustment of the strand (6a) are provided.

10. Energy guiding chain according to any one of claims 1 to 9, **characterised in that** chain links (2) are provided, wherein the two opposing link plates (3) are provided with a resiliently deformable region.

11. Energy guiding chain according to any one of claims 1 to 10, **characterised in that** chain links (2) having link plates (3) are provided which have, in the overlap region (21, 22) at the side facing the adjacent chain link, bevels (3a) which facilitate a deflection of the link plate (2) of the adjacent chain link in a transverse direction relative to the energy guiding chain (1).

12. Energy guiding chain according to any one of claims 1 to 11, **characterised in that** the adjacent link plates (3) of a strand (7) are connected to each other by means of a snap connection (4, 5, 35).

13. Energy guiding chain according to claim 12, **characterised in that** the pivot pin (4) has locking means (35) for producing a snap connection.

14. Energy guiding chain according to any one of claims 1 to 13, **characterised in that** at least one of the chain links (2) having a resiliently deformable region (20) has a divided transverse web (8) having regions (8a, 8b) which are arranged on opposing link plates (3) and which are separated from each other by a division portion, and **in that** at least one of the separated regions (8b) is provided with a recess (37) and the opposing region (8a) of the transverse web is provided with a projection (36) which engages in the recess.

15. Guiding construction for receiving and guiding an energy guiding chain according to any one of claims 1 to 14, the guiding construction (45) having elongate guiding profile-sections (40) which are opposite each other and which are aligned in a linear manner relative to each other, which profile-sections (40) have mutually opposing side walls for laterally guiding a region of the energy guiding chain, which region can be deposited between the side walls and which is arranged in an elongate manner, **characterised in that** at least one guiding profile-section (41, 42) is further provided and encloses an angle relative to the longitudinal direction of the guiding profile-section (40) which is arranged in an elongate manner.

16. Guiding construction according to claim 15, **characterised in that** guiding profile-sections (41, 42) are provided at both opposing side walls of the guiding construction (45) and adjoin, at an angle in a longitudinal direction, the guiding profile-sections (40), which are arranged in an elongate manner, and which guiding profile-sections (41, 42), at the opposing sides of the guiding construction, enclose a different angle relative to the elongate guiding profile-sections (40).

## Revendications

1. Chaîne de guidage d'énergie pour le guidage de tuyaux, de câbles, ou de conduites avec des maillons (2) constitués chacun de deux éclisses (3) et avec au moins une nervure transversale (8) reliant les éclisses, moyennant quoi les éclisses (3) de maillons (2) voisins comportent des zones d'articulation constituées d'axes d'articulation (4) et d'évidements (5) correspondants pour loger les axes d'articulation, à l'aide desquels les maillons (2) sont reliés entre eux de manière articulée et moyennant quoi les éclisses (3) de maillons (2) voisins comportent des zones de superposition (21, 22) se chevauchant entre elles et formant des lignes (6, 7), moyennant quoi les axes d'articulation (4) et les évidements (5) correspondants se trouvent dans les zones de superposition (21, 22) des éclisses, et moyennant quoi au moins une éclisse (3) est munie d'une zone d'affaiblissement (15, 20) qui, grâce au jeu apparaissant dans la zone d'articulation (4, 5) dans toutes les directions de l'éclisse (3), permet une modification de longueur de la ligne (7), **caractérisée en ce que** la zone d'affaiblissement (15, 20) est une zone de déformation élastique de l'éclisse (3).

2. Chaîne de guidage d'énergie selon la revendication 1, **caractérisée en ce que** la zone de déformation élastique (15) est disposée au niveau des liaisons articulées (4, 5) des maillons (2) voisins et s'étend sur toute la hauteur de l'éclisse (3).

3. Chaîne de guidage d'énergie selon la revendication 1, **caractérisée en ce que** la zone de déformation élastique (20) est disposée entre les liaisons articulées (4, 5) des maillons voisins, et s'étend sur toute la hauteur de l'éclisse (3).

4. Chaîne de guidage d'énergie selon l'une des revendications 1 à 3, **caractérisée en ce que** la zone de déformation élastique est réalisée comme un rétrécissement de section (20) de l'éclisse (3).

5. Chaîne de guidage d'énergie selon la revendication 4, **caractérisée en ce que** le rétrécissement de section (20) comporte des zones éloignées les unes des autres qui présentent, par rapport au plan principal de l'éclisse (3) correspondante, un décalage latéral entre elles et qui permettent, par la réduction du décalage latéral, un allongement de l'éclisse.

6. Chaîne de guidage d'énergie selon l'une des revendications 1 à 5, **caractérisée en ce que** la zone de déformation élastique (30a) se trouve au niveau d'un axe d'articulation (30) et est disposée entre un point d'attaque (35) de l'éclisse (3) voisine au niveau de l'axe d'articulation et la zone de fixation de l'axe d'articulation au niveau de cette éclisse (3) correspondante.

7. Chaîne de guidage d'énergie selon l'une des revendications 1 à 6, **caractérisée en ce que** la zone de déformation élastique est disposée au niveau d'une zone (15) adjacente à l'évidement (5) de logement de l'axe d'articulation (4).

8. Chaîne de guidage d'énergie selon l'une des revendications 1 à 7, **caractérisée en ce que** des maillons (2) coudés avec une zone dépassant vers l'extérieur de la chaîne (27) et une zone dépassant vers l'intérieur de la chaîne (28) et une zone de liaison (26) disposée entre celles-ci, sont prévus, et **en ce que** la zone de liaison (26) est réalisée sur toute la hauteur de l'éclisse (3), comme une zone de déformation élastique.

9. Chaîne de guidage d'énergie selon l'une des revendications 1 à 8, **caractérisée en ce que**, au moins au niveau de certaines zones d'une ligne (6a, 7a) de la chaîne de guidage d'énergie (1), des maillons (2) sont munis d'éclisses (3) qui comportent une zone de déformation élastique (20) permettant une modification de la longueur de la ligne (6a, 7a), et **en ce que**, au niveau des éclisses des maillons opposés , ne se trouve aucune zone d'affaiblissement permettant une modification de longueur de la ligne (6a).

10. Chaîne de guidage d'énergie selon l'une des revendications 1 à 9, **caractérisée en ce que** des maillons (2) sont prévus, pour lesquels les deux éclisses (3) opposées sont munies d'une zone de déformation élastique.

11. Chaîne de guidage d'énergie selon l'une des revendications 1 à 10, **caractérisée en ce que** des maillons (2) avec des éclisses (3) sont prévus, qui comportent, dans la zone de superposition (21, 22), du côté orienté vers le maillon voisin, des chanfreins (3a) qui facilitent une orientation de l'éclisse (3) du maillon voisin dans le sens transversal à la chaîne de guidage d'énergie (1).

12. Chaîne de guidage d'énergie selon l'une des revendications 1 à 11, **caractérisée en ce que** les éclisses (3) voisines d'une ligne (7) sont reliées entre elles à l'aide d'une liaison encliquetable (4, 5, 35).

13. Chaîne de guidage d'énergie selon la revendication 12, **caractérisée en ce que** l'axe d'articulation (4) comporte un moyen d'encliquetage (35) pour la réalisation d'un assemblage encliquetable.

14. Chaîne de guidage d'énergie selon l'une des revendications 1 à 13, **caractérisée en ce qu'**au moins un des maillons (2) avec une zone de déformation élastique (20) comporte une nervure transversale (8) divisée avec des zones (8a, 8b) disposées sur des éclisses (3) opposée et séparées par une interruption, et **en ce qu'**au moins une des zones séparées (8b) est munie d'un évidement (37) et la zone opposée (8a) de la nervure transversale est munie d'une saillie (36) dépassant dans l'évidement.

15. Construction de guidage pour le logement et le guidage d'une chaîne de guidage d'énergie selon l'une des revendications 1 à 14, moyennant quoi la construction de guidage (45) comporte des profilés de guidage (40) alignés entre eux et se faisant face dans l'état développé, qui comportent des parois latérales en face les unes des autres pour le guidage latéral d'une zone de la chaîne de guidage d'énergie disposée de manière développée entre les parois latérales, **caractérisée en ce qu'**au moins un profilé de guidage (41, 42) est prévu, qui fait un angle avec la direction longitudinale du profilé de guidage (40) développé.

16. construction de guidage selon la revendication 15, **caractérisée en ce qu'**au niveau des deux parois latérales opposées de la construction de guidage (45), des profilés de guidage (41, 42) sont prévus qui font un angle dans la direction longitudinale des profilés (40) développés et qui font, sur les côtés opposés de la construction de guidage, un angle différent avec les profilés de guidage (40) développés.
